Europäisches Patentamt

European Patent Office

Office européen des brevets

(11) Numéro de publication: **0 317 910**
**A1**

## DEMANDE DE BREVET EUROPEEN

(21) Numéro de dépôt: 88119193.6

(22) Date de dépôt: 18.11.88

(51) Int. Cl.4: **G02F 1/133**

(30) Priorité: 23.11.87 FR 8716319

(43) Date de publication de la demande:
31.05.89 Bulletin 89/22

(84) Etats contractants désignés:
CH DE FR GB LI NL

(71) Demandeur: **ASULAB S.A.**
**Faubourg du Lac 6**
**CH-2501 Bienne(CH)**

(72) Inventeur: **Grupp, Joachim**
**Chemin Gabriel 26**
**CH-2034 Peseux(CH)**

(74) Mandataire: **de Montmollin, Henri et al**
**ICB Ingénieurs Conseils en Brevets SA**
**Passage Max. Meuron 6**
**CH-2001 Neuchâtel(CH)**

(54) Cellule d'affichage à cristal liquide comprenant un réflecteur-diffuseur et au plus un polariseur.

(57) Pour simplifier la fabrication de la cellule (1), pour améliorer ses propriétés optiques et pour diminuer ses temps de commutation, les électrodes de commande (5), qui sont transparentes, sont disposées entre la plaque frontale (2) et la couche de cristal liquide (4), de même que les composants électroniques associés à ces électrodes (5) et que les pistes conductrices (6,7) reliant ces composants électroniques aux bornes de connexion de la cellule (1). En outre, la contre-électrode (8) est disposée entre la plaque arrière (3) et la couche de cristal liquide (4), cette contre-électrode (8) est en un matériau réfléchissant la lumière, et sa face située du côté de la couche de cristal liquide (4) est dépolie sur la totalité de sa surface située dans la zone d'affichage. Cette contre-électrode (8) constitue ainsi le réflecteur-diffuseur de la cellule (1).

Fig.2

## CELLULE D'AFFICHAGE A CRISTAL LIQUIDE COMPRENANT UN REFLECTEUR-DIFFUSEUR ET AU PLUS UN POLARISEUR

La présente invention a pour objet une cellule d'affichage à cristal liquide, du type comprenant un réflecteur-diffuseur et au plus un polariseur, comportant une couche de cristal liquide disposée entre une première plaque, transparente, et une deuxième plaque, une pluralité d'électrodes de commande disposées dans une zone d'affichage entre l'une desdites plaques et ladite couche de cristal liquide, une contre-électrode disposée entre l'autre desdites plaques et ladite couche de cristal liquide, et une pluralité de composants électroniques ayant chacun une borne reliée à l'une desdites électrodes de commande.

Dans certaines de ces cellules, un colorant dichroïque est mélangé au cristal liquide. Parmi ces dernières, certaines ne comportent aucun polariseur (cellules dites de White-Taylor), et d'autres comportent un seul polariseur, disposé à l'avant de la cellule (cellules dites de Heilmeier).

On connaît également de telles cellules dans lesquelles le cristal liquide est du type dit nématique tordu, sans adjonction de colorant dichroïque, et qui ne comprennent qu'un seul polariseur situé à l'avant de la cellule.

De nombreux documents, par exemple le compte-rendu de la conférence que M. A.H. Firester a faite au congrès du SID (Society for Information Display) de 1987, la demande de brevet GB-A-2078421 ou le brevet DE-C-2837431, décrivent de telles cellules.

Dans ces cellules connues, la contre-électrode est transparente et elle est disposée sur la face interne de la plaque frontale qui est en verre et, donc, également transparente.

En outre, les électrodes de commande de ces cellules sont disposées en lignes et en colonnes sur la face interne de la plaque arrière, qui est également en verre, chaque électrode correspondant à un point d'affichage, c'est-à-dire un point qui peut être rendu sélectivement visible ou invisible. La zone où sont situés tous ces points d'affichage dans une vue en plan de la cellule est appelée zone d'affichage de la cellule.

Dans les cellules décrites par la demande de brevet et le brevet mentionnés ci-dessus, les composants électroniques associés à ces électrodes de commande sont des transistors en couche mince et la contre-électrode est d'une seule pièce. Cette contre-électrode recouvre la totalité de la face interne de la plaque frontale, ou au moins la partie de celle-ci qui est située dans la zone d'affichage de la cellule.

Dans certaines des cellules décrites dans le compte-rendu de conférence mentionné ci-dessus, les composants électroniques associés aux électrodes de commande sont des éléments n'ayant que deux bornes, par exemple des éléments appelés MIM (métal-isolant-métal), qui ont une caractéristique courant-tension présentant un coude très marqué à une tension bien déterminée. Dans ces cellules, la contre-électrode est formée de bandes conductrices parallèles les unes aux autres, disposées chacune en regard d'une ligne ou d'une colonne d'électrodes de commande, et reliées chacune à une borne de connexion de la cellule.

Dans toutes ces cellules connues, les composants électroniques sont disposés sur la face interne de la plaque arrière de la cellule, de même que les pistes conductrices qui les relient électriquement aux bornes de connexion de la cellule.

Les électrodes de commande, les composants électroniques et les pistes conductrices sont fabriqués par l'un ou l'autre de divers procédés photolithographiques connus qui comportent diverses étapes de dépôt et/ou de gravage de couches de matériaux conducteurs, isolants ou semi-conducteurs à travers des masques adéquats.

Dans certaines des cellules connues, comme par exemple dans celle qui est décrite par le brevet DE-C-2837431 déjà cité, la face interne de la plaque arrière est dépolie aux endroits où sont disposés les électrodes de commande, de manière que la surface de celle-ci soit rugueuse. En outre, ces électrodes de commande sont en un métal réfléchissant, comme l'aluminium, et servent en même temps de réflecteur et de diffuseur de la lumière qui les atteint après avoir traversé la cellule.

Il est bien connu que, quels que soient les composants électroniques associés aux électrodes de commande de ces cellules, leurs caractéristiques dépendent très fortement de l'épaisseur des différentes couches de matériau conducteur, semiconducteur et/ou isolant qui les forment. Ces épaisseurs étant très faibles, les endroits où sont disposés ces composants électroniques doivent donc être parfaitement lisses, faute de quoi ces composants ne fonctionneraient pas correctement, ou même pas du tout.

Dans la cellule décrite par le brevet DE-C-2837431, le dépolissage de la plaque arrière, qui peut être réalisé par exemple à l'aide d'acide fluorhydrique, doit donc être précédé d'une étape de dépôt d'un masque protégeant au moins les endroits où ces éléments électroniques doivent être disposés et laissant exposés les emplacements des électrodes de commande.

On sait pertinemment que l'angle de vision d'une cellule à cristal liquide, c'est-à-dire l'angle sous lequel les informations affichées par cette cellule peuvent être lues correctement, dépend directement de la rugosité du diffuseur de cette cellule.

On sait également que, lorsqu'une surface de verre est attaquée chimiquement, sa rugosité augmente avec la profondeur de cette attaque, c'est-à-dire avec l'épaisseur de la matière enlevée.

On a ainsi constaté qu'une rugosité convenable, donnant à la cellule un angle de lecture suffisamment grand, ne peut être obtenue que si la profondeur du gravage de la face interne de la plaque arrière est supérieure à 10 micromètres environ.

Après cette opération de gravage, la face interne de la plaque arrièe d'une cellule telle que celle qui est décrite dans le brevet DE-C-2837432 déjà mentionné présente donc, aux endroits où seront disposées les électrodes de commande, des creux ayant une profondeur de 10 micromètres au moins, séparés les uns des autres par des parois.

Pour que les divers points visibles formant une information affichée par la cellule ne soient pas séparés les uns des autres par des espaces trop importants, ces parois doivent être très minces. Pratiquement, leur épaisseur ne devrait pas dépasser 20 micromètres environ.

Cette structure de la plaque arrièe de la cellule à ce stade de sa fabrication complique énormément la suite de cette fabrication.

Notamment, les composants électroniques et les pistes conductrices de liaison de ces composants avec les bornes de connexion de la cellule doivent être disposés sur le sommet des parois mentionnées ci-dessus.

L'alignement des divers masques utilisés pour la fabrication de ces composants électroniques et de ces pistes conductrices est très difficile à réaliser à cause de la faible largeur de sommet de ces parois.

En outre, le gravage chimique mentionné ci-dessus n'agit pas uniquement dans une direction perpendiculaire à la surface de la plaque, mais également, de manière bien connue, dans une direction parallèle à cette surface.

Les parois séparant les creux formés par ce gravage ont donc une épaisseur plus faible à leur base qu'à leur sommet.

Les faces latérales de ces parois sont donc en surplomb, et il est très difficile de déposer sur ces parois en surplomb les pistes conductrices destinées à relier les composants électroniques, situés au sommet de ces parois, aux électrodes de commande situées au fond des creux.

De même, la présence de creux relativement profonds dans la plaque arrière de la cellule, ces creux étant séparés par des parois dont les faces sont en surplomb, fait courir le risque d'un remplissage incomplet de cette cellule par le cristal liquide.

Un inconvénient supplémentaire des cellules telles que celle qui vient d'être décrite provient du fait que la couche de cristal liquide a forcément une épaisseur supérieure à la profondeur des creux mentionnés ci-dessus, c'est-à-dire pratiquement une épaisseur de 15 à 20 micromètres environ. Il en résulte que les temps de commutation de ces cellules, qui dépendent directement de cette épaisseur, sont assez longs, ce qui empêche pratiquement de les utiliser lorsque le nombre de points à afficher est élevé.

La demande de brevet GB-A-2078421 décrit une autre cellule d'affichage de même genre, dans laquelle les électrodes de commandes comportent une couche d'aluminium déposée sur une couche de titane.

De telles électrodes sont réfléchissantes et diffusantes, de sorte que la plaque arrière de la cellule, sur laquelle elles sont disposées, ne doit pas être gravée pour la rendre rugueuse. Cette cellule ne présente donc pas les inconvénients provoqués par ce gravage qui ont été mentionnés ci-dessus.

Cependant, pour que les électrodes de commande d'une telle cellule diffusent la lumière qui les atteint, il faut que les couches de titane et d'aluminium qui les composent soient déposés par évaporation sous vide, et dans des conditions très strictement définies. Ces opérations de déposition par évaporation sous vide sont chères, ce qui augmente le prix de revient des cellules.

En outre, la diffusion de la lumière par de telles électrodes n'est pas suffisante pour que l'angle de vision de ces cellules soit acceptable.

Un but de la présente invention est de proposer une cellule d'affichage à cristal liquide du genre de celles qui ont été décrites ci-dessus qui ne présente pas les inconvénients des cellules connues, c'est-à-dire qui est facile à fabriquer et donc d'un prix de revient faible, dont les propriétés optiques, notamment la diffusion de la lumière traversant la cellule, l'ange de vue et la luminosité sont meilleures que celles des cellules connues, et dont les temps de commutation peuvent être faibles.

Ce but est atteint grâce au fait que, dans la cellule d'affichage selon l'invention, les électrodes de commande sont transparentes et disposés entre le première plaque et la couche de cristal liquide, et grâce au fait que la contre-électrode est disposée entre la deuxième plaque et la couche de cristal liquide, qu'elle est en un matériau réfléchissant la lumière, et que sa face située du côté de la couche de cristal liquide est dépolie sur la totalité

3

de sa surface située dans la zone d'affichage, la contre-électrode constituant ainsi le réflecteur-diffuseur.

L'invention va maintenant être décrite plus en détail à l'aide du dessin dans lequel :

- la figure 1 est une vue en plan schématique et partielle d'une cellule d'affichage selon l'invention ; et

- la figure 2 est une coupe transversale et schématique selon l'axe A-A de la cellule de la figure 1.

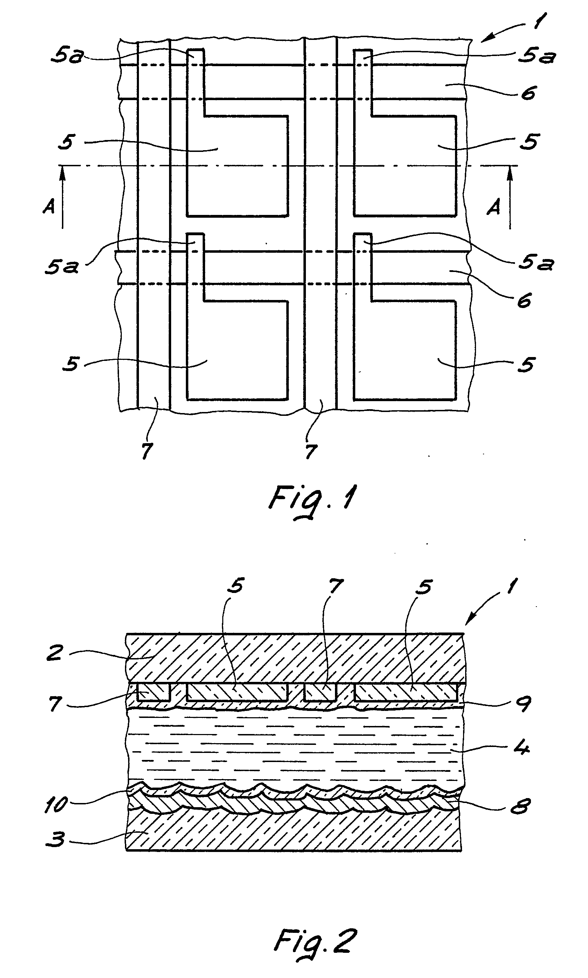

Dans la forme d'exécution représentée à titre d'exemple non limitatif par les figures 1 et 2, le cellule d'affichage selon l'invention est désignée par la référence 1.

Cette cellule 1 comporte une plaque frontale 2 transparente et une plaque arrière 3 qui sont maintenues à une certaine distance l'une de l'autre par des moyens de fixation bien connus et qui n'ont pas été représentés.

Une couche de cristal liquide 4 est disposée entre les plaques 2 et 3, dans l'espace défini par ces plaques et leurs moyens de fixation mentionnés ci-dessus.

Comme cela sera rendu évident par la suite de cette description, le cristal liquide de cette couche 4 peut être de n'importe quelle nature et, le cas échéant, un colorant, par exemple un colorant dichroïque, et/ou un composé chiralique peuvent lui être mélangés.

La cellule 1 comporte également des électrodes de commande 5 qui sont réalisées en un matériau transparent électriquement conducteur tel que l'oxyde d'indium par exemple.

Les électrodes 5 sont disposées en lignes et en colonnes sur la face interne de la plaque frontale 2, c'est-à-dire entre cette plaque 2 et la couche de cristal liquide 4.

De manière bien connue, chacune de ces électrodes 5 est destinée à coopérer avec une contre-électrode, qui sera décrite plus loin, pour rendre visible ou invisible un point d'affichage, l'ensemble de ces points d'affichage définissant la zone d'affichage de la cellule.

Selon les cas, cette zone d'affichage peut s'étendre à toute la surface de la couche de cristal liquide, dans une vue en plan de la cellule, ou à une partie seulement de cette surface.

Dans la figure 1, les électrodes 5 ont été représentées avec une forme générale carrée, mais il est évident qu'elles peuvent avoir n'importe quelle forme.

Les composants électroniques associés aux électrodes 5 sont, dans cet exemple, des transistors MOS en couche mince tels que ceux qui sont décrits dans l'article de MM. M. Le Contellec et al. intitulé "Transistors en couches minces pour adressage d'écrans plats à cristaux liquides" et paru dans le numéro 124 de la revue "L' Echo des Recherches" éditée au 2eme trimestre de 1986 par le Service des Recherches et du Contrôle Technique de l'Administration Française des PTT, Paris (France).

Ces transistors ne seront pas décrits en détail ici et n'ont pas été représentés aux figures 1 et 2.

Il suffit de mentionner que chacun de ces transistors comporte un drain relié électriquement à un doigt de connexion 5a qui fait partie de l'électrode 5 à laquelle il est associé, et qu'il est situé à l'intersection, dans la vue en plan de la figure 1, d'une piste conductrice 6 et d'une piste conductrice 7.

Chaque piste 6 fait partie d'une pluralité de pistes parallèles qui relient chacune les grilles de tous les transistors associés aux électrodes 5 d'une même ligne à une borne de connexion, non représentée, de la cellule 1. Ces pistes 6 sont de préférence en un matériau conducteur opaque tel que l'aluminum, pour éviter des phénomèmes photoélectriques qui pourraient perturber le fonctionnement des transistors.

Chaque piste 7 fait partie d'une' autre pluralité de pistes parallèles qui relient chacune les sources de tous les transistors associés aux électrodes 5 d'une même colonne à une borne de connexion, également non représentée, de la cellule 1. Ces pistes 7 peuvent être en un matériau conducteur transparent tel que l'oxyde d'indium.

En outre, les pistes 7 sont disposées directement sur la face interne de la plaque 2, comme les électrodes 5.

La face interne de la plaque arrière 3 est dépolie, au moins dans la zone d'affichage de la cellule, et une contre-électrode 8 formée par une couche d'un matériau électriquement conducteur et réfléchissant bien la lumière est disposés au moins sur la partie de cette face interne qui est dépolie.

Cette contre-électrode 8 est suffisamment mince pour que sa surface située du côté de la couche de cristal liquide 4 présente sensiblement les mêmes irrégularités que la surface dépolie de la plaque 3.

Il sera rendu évident par la suite de cette description que la face interne de la plaque arrière 3 peut être dépolie sur une autre surface plus grande que celle de la zone d'affichage de la cellule, et qu'il est même avantageux que cette plaque arrière 3 soit dépolie sur la totalité de sa surface.

Il sera également rendu évident que la contre-électrode 8 peut être disposée sur une surface plus grande que celle de la zone d'affichage de la cellule, voire même sur la totalité de la surface de la plaque arrière 3.

En outre, comme pratiquement toutes les cellules d'affichages à cristal liquide, la cellule 1 comporte des couches d'alignement 9 et 10 qui recouvrent respectivement la face interne de plaques 2 et 3, au moins dans la zone d'affichage de la cellule 1, ainsi que les divers éléments disposés sur ces plaques et décrits ci-dessus.

Ces couches 9 et 10 sont chacune en contact avec l'une des faces de la couche de cristal liquide 4. Elles sont destinées, de manière bien connue, à donner aux molécules du cristal liquide qui sont en contact avec elles des directions bien déterminées. Elles ne seront pas décrites en détail ici car elles peuvent être de natures très diverses selon le genre de cristal liquide utilisé pour réaliser la couche 4 et selon la manière de commander ce cristal liquide qui est prévue.

Dans certains cas, la cellule 1 comporte en outre un polariseur disposé sur la face externe de la plaque frontale 2 et qui n'a pas été représenté. Un tel polariseur est nécessaire, notamment, lorsque la cellule 1 est du type dit "de Heilmeier", c'est-à-dire lorsqu'un colorant dichroïque est mélangé au cristal liquide de la couche 4, et que les couches d'alignements 9 et 10 sont telles que les molécules de ce cristal liquide en contact avec elles ont toutes une direction parallèle aux plaques 2 et 3 et, selon les cas, parallèle ou perpendiculaire à la direction de polarisation du polariseur.

La cellule selon l'invention dont une forme d'exécution vient d'être décrite présente plusieurs avantages par rapport aux cellules connues telles que celle qui est décrite dans le brevet DE-C-2837431 déjà mentionné.

L'un de ces avantages réside dans le fait que la face interne de la plaque arrière 3 est dépolie sur toute sa surface, au moins dans la zone d'affichage de la cellule. L'opération de gravage chimique nécessaire à l'obtention de ce dépoli est donc beaucoup plus simple à réaliser que dans la cellule décrite dans le brevet allemand mentionné ci-dessus où ce gravage ne doit être réalisé qu'aux emplacements des électrodes de commande, ces emplacements étant séparés par des zones qui ne doivent pas être gravées.

En outre, ce gravage chimique peut être poursuivi pendant tout le temps nécessaire à l'obtention d'une rugosité suffisante pour que l'angle de vision de la cellule soit aussi grand qu'on le désire.

En effet, la profondeur de gravage, c'est-à-dire l'épaisseur de matière enlevée pendant ce gravage peut être absolument quelconque et atteindre, si nécessaire, plusieurs dizaines de micromètres sans que les opérations ultérieures de fabrication de la cellule n'en soient compliquées, voire même rendues impossible.

En plus, la contre-électrode 8 peut être réalisée en argent et être déposée sur la face interne de la plaque arrière 3, après que celle-ci a été dépolie, par un procédé purement chimique bien connu, très facile à mettre en oeuvre et bien meilleur marché que le procédé de déposition sous vide qui doit obligatoirement être utilisé pour déposer les électrodes de la cellule connue décrite dans le brevet allemand mentionné ci-dessus.

Un autre avantage de la cellule selon l'invention par rapport à celle qui est décrite dans ce brevet allemand réside dans le fait que la plaque sur laquelle sont disposés les électrodes 5 et les transistors qui leur sont associés, c'est-à-dire la plaque frontale 2, n'a pas besoin d'être dépolie et qu'elle est donc parfaitement plane.

La fabrication des divers éléments disposés sur cette plaque 2 est donc plus facile que celle des éléments correspondants de la cellule décrite par ce brevet allemand, puisque ces derniers sont disposés sur une plaque, dans ce cas la plaque arrière de la cellule, qui n'est pas plane.

Lorsque la plaque 3 est dépolie sur toute sa surface, la cellule selon l'invention a encore comme avantage que l'épaisseur de la couche de cristal liquide 4 ne dépend pas de la profondeur jusqu'à laquelle il a fallu graver cette plaque pour obtenir la rugosité voulue.

Cette épaisseur de la couche de cristal liquide 4 peut donc être faible, ce qui a comme conséquence que les temps de commutation de la cellule peuvent également être faibles et que le nombre de points d'affichage de cette cellule peut donc être très élevé.

Par rapport à la cellule d'affichage décrite dans la demande de brevet GB-A-2078421 déjà mentionnée la cellule selon la présente invention présente également l'avantage de pouvoir être fabriquée de manière plus simple et donc d'avoir un prix de revient plus faible.

Cet avantage est notamment dû au fait que dans la cellule selon l'invention, les électrodes de commande 5 et les pistes conductrices 7 peuvent être fabriquées simultanément par une simple opération de gravage chimique d'une couche d'oxyde d'indium déposée sur la surface de la plaque frontale 2, alors que dans la cellule connue, les pistes conductrices correspondant à ces pistes 7 et les électrodes de commande doivent être fabriquées séparément, ces dernières devant en outre être fabriquées par évaporation sous vide qui est une opération chère.

En outre, l'angle de vision de la cellule selon l'invention est supérieur à celui de la cellule décrite dans la demande de brevet GB-A-2078421.

Cet avantage provient de la très bonne diffusion de la lumière par la contre-électrode qui est due à la rugosité importante de la face interne de la plaque arrière 3.

Dans la cellule qui vient d'être décrite et qui est représentée aux figures 1 et 2, les composants électroniques associés aux électrodes sont des transistors en couches minces. Il est évident que tous les avantages de la cellule selon l'invention sont conservés si ces composants électroniques sont d'autres composants à trois bornes, tels que des thyristors, ou des composants à deux bornes, tels que les éléments MIM déjà mentionnés.

D'autre part, toujours dans la cellule représentée aux figures 1 et 2, la fonction de réflexion et de diffusion de la lumière est assurée par la contre-électrode 8 elle-même. Tous les avantages de la cellule selon l'invention sont bien entendu également conservés si la contre-électrode 8 est transparente et que la fonction de réflexion et de diffusion de la lumière est assurée par une couche réfléchissante disposée sur la face interne dépolie de la plaque arrière 3, entre cette dernière et cette contre-électrode transparente, et/ou si la contre-électrode 8 est formée de bandes parallèles distinctes, comme cela est le cas lorsque les composants électroniques associés aux électrodes de commande sont des composants à deux bornes tels que les éléments MIM.

Il faut noter que, dans ce dernier cas, la face interne de la plaque arrière de la cellule peut également être dépolie entre les bandes formant cette contre-électrode, de sorte que l'opération de dépolissage de cette plaque arrière n'est pas plus compliquée que dans le cas où la contre-électrode est en une seule pièce.

Il faut encore noter que la présence des électrodes de commande, des composants électroniques et des pistes de liaison de ces derniers avec les bornes de connexion de la cellule selon la présente invention sur la face interne de la plaque frontale de celle-ci ne diminue pas, comme on pourrait le craindre, la brillance de cette cellule par rapport à celle des cellules connues.

Au contraire, le fait que la plaque arrière de la cellule ne comporte pas les éléments mentionnés ci-dessus permet de choisir beaucoup plus librement les caractéristiques du réflecteur-diffuseur formé par cette plaque arrière et la contre-électrode, et d'augmenter, si nécessaire, la brillance de la cellule par rapport à celle des cellules connues.

Il est évident que de nombreuses modifications peuvent être apportées à la cellule qui vient d'être décrite sans que la cellule ainsi modifiée ne sorte du cadre de la présente invention.

Ainsi, par exemple, la face interne de la plaque arrière 3 peut être plane, et la contre-électrode 8 peut être dépolie après avoir été déposée sur cette face plane.

Une cellule ainsi constituée présente les mêmes avantages que la cellule décrite ci-dessus à l'aide des figures 1 et 2.

## Revendications

1. Cellule d'affichage à cristal liquide, du type comprenant un réflecteur-diffuseur et au plus un polariseur, comportant une couche de cristal liquide (4) disposée entre une première plaque (2), transparente, et une deuxième plaque (3), une pluralité d'électrodes de commande (5) disposées dans une zone d'affichage entre l'une desdites plaques (2) et ladite couche de cristal liquide (4), une contre-électrode (8) disposée entre l'autre desdites plaques (3) et ladite couche de cristal liquide (4), et une pluralité de composants électroniques reliés chacun à l'une desdites électrodes de commande (5), caractérisée par le fait que lesdites électrodes de commande (5) sont transparentes et disposées entre ladite première plaque (2) et ladite couche de cristal liquide (4), et par le fait que ladite contre-électrode (8) est disposée entre ladite deuxième plaque (3) et ladite couche de cristal liquide (4), qu'elle est en un matériau réfléchissant la lumière, et que sa face située du côté de ladite couche de cristal liquide (4) est dépolie sur la totalité de sa surface située dans ladite zone d'affichage, ladite contre-électrode (8) constituant ainsi ledit réflecteur-diffuseur.

2. Cellule d'affichage selon la revendication 1, caractérisée par le fait que ladite contre-électrode (8) est disposée en contact avec la face de ladite deuxième plaque (3) qui est située du côté de ladite couche de cristal liquide (4).

3. Cellule d'affichage selon la revendication 2, caractérisée par le fait que ladite face de la deuxième plaque (3) est dépolie sur la totalité de sa surface, et que ladite contre-électrode (8) est disposée en contact avec ladite face dépolie de ladite deuxième plaque (3) de manière que sa face située du côté de ladite couche de cristal liquide (4) présente sensiblement les mêmes irrégularités que ladite face dépolie de ladite deuxième plaque (3).

*Fig. 1*

*Fig. 2*

# RAPPORT DE RECHERCHE EUROPEENNE

**Office européen des brevets**

Numero de la demande

EP 88 11 9193

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-2 813 007 (EBAUCHES) <br> * Revendications 1,4,5 * <br> --- | 1-3 | G 02 F 1/133 |
| Y | PATENT ABSTRACTS OF JAPAN, vol. 8, no. 133 (P-281)[1570], 20 juin 1984, page 124 P 281; & JP-A-59 36 225 (SUWA SEIKOSHA K.K.) 28-02-1984 <br> * Figures; résumé * <br> --- | 1-3 | |
| A | GB-A-2 028 529 (GENERAL ELECTRIC) <br> * Figures 2-3d; page 2, ligne 110 - page 3, ligne 103 * <br> --- | 1-3 | |
| A | EP-A-0 084 930 (TOKYO SHIBAURA DENKI K.K.) <br> * Résumé; figures 1-10B * <br> --- | 1-3 | |
| A | PATENT ABSTRACTS OF JAPAN, vol. 6, no. 59 (P-110)[937], 16 avril 1982; & JP-A-57 615 (SUWA SEIKOSHA K.K.) 05-01-1982 <br> * Résumé * <br> ----- | 1-3 | **DOMAINES TECHNIQUES RECHERCHES (Int. Cl.4)** <br><br> G 02 F |

Le présent rapport a été établi pour toutes les revendications

| Lieu de la recherche | Date d'achèvement de la recherche | Examinateur |
|---|---|---|
| LA HAYE | 17-02-1989 | CONRAD V.HEYDENDORFF K. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...................................................................
& : membre de la même famille, document correspondant

EPO FORM 1503 03.82 (P0402)